# EUROPEAN PATENT SPECIFICATION

(11) **EP 2 502 137 B1**
(45) Date of publication and mention of the grant of the patent: **25.03.2015**
(21) Application number: 10788396.9
(22) Date of filing: 26.10.2010
(51) Int. Cl.: G06F 3/0482, G06F 3/0485, G06F 3/0488

(54) **METHODS, DEVICES, AND COMPUTER PROGRAM PRODUCTS FOR PROVIDING MULTI-REGION TOUCH SCROLLING**
VERFAHREN, VORRICHTUNGEN UND COMPUTERPROGRAMMPRODUKTE FÜR MEHRBREICHS-BERÜHRUNGSBILDLAUF
PROCÉDÉS, DISPOSITIFS ET PRODUITS DE PROGRAMME INFORMATIQUE PERMETTANT DE PRODUIRE UN DÉFILEMENT TACTILE MULTIRÉGION

(30) Priority: 20.11.2009 US 622814
(43) Date of publication of application: 26.09.2012
(73) Proprietor: Sony Ericsson Mobile Communications AB, 221 88 Lund (SE)
(72) Inventor: BERGSTEN, Jonas, SE-211 52 Malmö (SE); FREDRIKSSON, Jenny, S-21125 Malmö (SE); SJÖBLOM, Samuel, S-21158 Malmö (SE)
(74) Representative: Valea AB
(86) International application number: PCT/IB2010/002726
(87) International publication number: WO 2011/061582

(56) References cited:
- EP-A1- 1 942 401
- WO-A1-2008/025370
- WO-A1-2008/085744
- WO-A2-2007/067858
- WO-A2-2009/062763
- US-A1- 2002 135 602

## Description

### FIELD

The present invention relates to electronic devices and, more particularly, to electronic devices with touch-sensitive user interfaces and related methods of operation.

### BACKGROUND

Electronic devices such as handheld and/or desktop computing devices are continuing to evolve to provide increasing functionality. Consumers may now select from a wide array of handheld and/or desktop electronic devices, such as cellular mobile terminals, personal digital assistants (PDAs), laptop computers, and desktop computers. Such devices typically provide audio and/or video user interfaces. For example, a mobile terminal may include a display, keypad, speaker and microphone, which together support telephony functions. These components may also support multimedia, gaming and other applications.

Producers of such devices constantly strive to provide new audio and visual interfaces to enhance user experience and, thus, garner greater market share. For example, handheld and desktop devices have been provided with touchscreen displays that may allow for user scrolling and other inputs using a user input object, such a finger or thumb. However, when scrolling in a relatively long list of entries (such as a contact list on a mobile phone) responsive to a user touch input, there may be problems with speed and/or accuracy. For example, if there are several hundred entries in the list, several touch inputs may be required to scroll to a desired entry, which may take a relatively long time. Conversely, an on-screen scrollbar may be used to scroll through the large portions of the list more quickly, but at the expense of accuracy, as a relatively small touch input may represent a large portion of the list.

WO2007067858 discloses movement of a point of contact by a user over an index on a touch-sensitive display is determined. The displayed index has a sequence of index items. In response to the movement, a list of information items on the touch-sensitive display is scrolled. The list of information items may include a sequence of information item subsets corresponding to the sequence of index items. The scrolling may include scrolling through a respective information item subset if the point of contact moves over a corresponding respective index item.

WO2009062763 discloses a user interface, comprising a screen arranged to view content. The screen is arranged to display a part of the content if there is not space for the entire content on the screen, and wherein the content is scrollable to enable the desired part of the content to be displayed; and a touch sensitive input area arranged to enable input of touch actions, wherein a first touch action is adapted to control scrolling of said content, wherein a speed relation determines a relation between a speed of scrolling and a speed of the touch action in a first direction on said touch sensitive input, and wherein the speed relation is determined by the position of the touch action on said touch sensitive area along a second direction perpendicular to said first direction. Further, an apparatus, a method, and a computer program for viewing of content on a screen are disclosed.

WO2008025370 discloses a touchpad based on polar coordinates, in which the angular position and the radial position are transformed into a one-dimensional signal. The progressiveness of the relation between the angular position and the one- dimensional signal is a function of the radial position. The touchpad may have two discrete curved sections with different input sensitivity. The touchpad may also be provided with a central select key.

### SUMMARY

According to some embodiments of the present invention, an electronic device is provided as claimed in claim 1.

In some embodiments, the processor may be operable to detect a distance of movement of the scrolling input on the touch-sensitive interface responsive to the touch signal, to correlate the distance of movement to the first amount of the text and/or graphics according to a first sensitivity ratio responsive to detection of the scrolling input at the first region, and to correlate the distance of movement to the second amount of the text and/or graphics according to a second sensitivity ratio responsive to detection of the same scrolling input at the second region.

In some embodiments, the first sensitivity ratio may associate a scrollable area of the first region with a first percentage of the text and/or graphics, and the second sensitivity ratio may associate a scrollable area of the second region with a second percentage of the text and/or graphics that is less than the first percentage. As such, the distance of movement of the scrolling input may represent a greater amount of the text and/or graphics responsive to detection thereof at the first region than at the second region.

In some embodiments, the first sensitivity ratio may associate a scrollable area of the first region with an entirety of the text and/or graphics, and the second sensitivity ratio may associate a scrollable area of the second region with a fraction of the text and/or graphics. As such, the processor may be operable to scroll less than or up to the entirety of the text and/or graphics responsive to detection of the scrolling input at the first region, and the processor may be operable to preclude scrolling of more than the fraction of the text and/or graphics responsive to detection of the same scrolling input at the second region.

In some embodiments, the processor may be operable to scroll the first amount of the text and/or graphics on the display screen at a greater scrolling speed than the second amount of the text and/or graphics.

In some embodiments, the second region may be immediately adjacent to the first region on the touch-sensitive interface such that the touch-sensitive interface may be operable to receive the scrolling input at the first and/or second regions without lifting of the user input object from the touch-sensitive interface.

In some embodiments, the first and second regions may have different x-coordinates along an x-axis of the touch-sensitive interface so that the first and second regions provide first and second columns on the touch-sensitive interface. The scrolling input may have substantially similar y-coordinates along a y-axis of the touch sensitive interface within the first or second column.

In some embodiments, the touch sensitive interface may further include a third region. The processor may be operable to scroll a third amount of the text and/or graphics that is less than the second amount on the display screen responsive to detection of the same scrolling input at the third region.

In some embodiments, ones of the array of sensors underlying the first region may be operable to generate a different touch signal responsive to receiving the scrolling input than ones of the array of sensors underlying the second region.

In some embodiments, ones of the array of sensors underlying the first region may be a greater in number than ones of the array of sensors underlying the second region.

In some embodiments, the display screen may be provided underlying the touch sensitive interface such that the user interface comprises a touch screen display.

According to further embodiments of the present invention, in a method of operating an electronic device according to claim 10.

In some embodiments, a distance of movement of the scrolling input on the touch-sensitive interface may be detected responsive to the touch signal. The distance of movement may be correlated to the first amount of the text and/or graphics according to a first sensitivity ratio responsive to detection of the scrolling input at the first region, and the distance of movement may be correlated to the second amount of the text and/or graphics according to a second sensitivity ratio responsive to detection of the same scrolling input at the second region.

In some embodiments, the first amount of the text and/or graphics may be scrolled on the display screen at a greater scrolling speed than the second amount of the text and/or graphics.

Other electronic devices, methods, and/or computer program products according to embodiments of the invention will be or become apparent to one with skill in the art upon review of the following drawings and detailed description. It is intended that all such additional electronic devices, methods, and/or computer program products, as well as any and all combinations of the above embodiments, be included within this description, be within the scope of the present invention, and be protected by the accompanying claims.

### BRIEF DESCRIPTION OF THE DRAWINGS

The accompanying drawings, which are included to provide a further understanding of the invention and are incorporated in and constitute a part of this application, illustrate certain embodiments of the invention. In the drawings:
**Figure 1** is a schematic block diagram illustrating an electronic device including a touch-sensitive interface that provides multi-region touch scrolling in accordance with some embodiments of the present invention;
**Figure 2A** and **2B** illustrate example mobile terminals including respective touch-sensitive interfaces that provide multi-region touch scrolling in accordance with some embodiments of the present invention;
**Figure 3A** and **3B** illustrate touchscreen displays having multiple touch-sensitive regions in accordance with some embodiments of the present invention;
**Figures 4A** to **4E** illustrates multi-region touch scrolling in a touchscreen display having multiple touch-sensitive regions in accordance with some embodiments of the present invention; and
**Figure 5** is a flow diagram illustrating an example control sequence for operating an electronic device to provide multi-region touch scrolling of text and/or graphics on a display screen in accordance with some embodiments of the present invention.

### DETAILED DESCRIPTION OF EMBODIMENTS

The present invention now will be described more fully hereinafter with reference to the accompanying figures, in which embodiments are shown. This invention may, however, be embodied in many alternate forms and should not be construed as limited to the embodiments set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising," "includes" and/or "including" (and variants thereof) when used in this specification, specify the presence of stated features, integers, steps, operations, elements, and/or components, but do not preclude the presence or addition of one or more other features, integers, steps, operations, elements, components, and/or groups thereof. Moreover, when an element is referred to as being "responsive" to another element/step (and variants thereof), it can be directly responsive to the other element/step, or intervening elements/steps may be present. In contrast, when an element/step is referred to as being "directly responsive" to another element/step (and variants thereof), there are no intervening elements/steps present. As used herein the term "and/or" includes any and all combinations of one or more of the associated listed items and may be abbreviated as "/".

It will be understood that, although the terms first, second, third, etc. may be used herein to describe various elements, these elements should not be limited by these terms. These terms are only used to distinguish one element from another.

The present invention is described below with reference to block diagrams and/or flowchart illustrations of methods, apparatus (systems and/or devices) and/or computer program products according to embodiments of the invention. It is understood that a block of the block diagrams and/or flowchart illustrations, and combinations of blocks in the block diagrams and/or flowchart illustrations, can be implemented by hardware and/or in software (including firmware, resident software, micro-code, etc.), referred to herein as "circuitry" or "circuit". For example, some of the functionality may be implemented in computer program instructions that may be provided to a processor of a general purpose computer, special purpose computer, digital signal processor and/or other programmable data processing apparatus to produce a machine, such that the instructions, which execute via the processor of the computer and/or other programmable data processing apparatus, create means (functionality) and/or structure for implementing the functions/acts specified in the block diagrams and/or flowchart block or blocks.

These computer program instructions may also be stored in a computer-readable memory that can direct a processor of the computer and/or other programmable data processing apparatus to function in a particular manner, such that the instructions stored in the computer-readable memory produce an article of manufacture including instructions which implement the function/act as specified in the block diagrams and/or flowchart block or blocks. The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

A computer-usable or computer-readable medium may be, for example but not limited to, an electronic, magnetic, optical, electromagnetic or semiconductor system, apparatus or device. More specific examples (a non-exhaustive list) of the computer-readable medium would include the following: a portable computer diskette, a random access memory (RAM), a read-only memory (ROM), an erasable programmable read-only memory (EPROM or Flash memory), and a portable optical and/or magnetic media, such as a flash disk or CD-ROM.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Although some of the diagrams include arrows on communication paths to show a primary direction of communication, it is to be understood that communication may occur in the opposite direction to the depicted arrows.

For purposes of illustration and explanation only, various embodiments of the present invention are described herein primarily in the context of mobile terminals including touchscreen displays; however, it will be understood that the present invention is not limited to such embodiments and may be embodied generally in any system that employs a touch-sensitive user interface. As used herein, a "touch-sensitive interface" may refer to an electronic input device, such as a touchscreen, that is configured to detect touch and/or motion-based user inputs on an area within which the sensor is bounded. As such, touch sensitive interfaces as described herein do not encompass button, toggle, or other physical switch-type interfaces. Although described herein primarily with reference to capacitance-based touch sensitive interfaces, it is to be understood that some embodiments of the present invention may employ one or more other touch sensing technologies, such as resistance, surface acoustic wave (SAW), infrared, strain gauge, optical imaging, dispersive signal, acoustic pulse imaging, frustrated total internal reflection, and/or other touch sensing technologies.

As used herein, "scrolling" refers to sliding text, images or video across a display screen, from top-to-bottom, bottom-to-top, left-to-right, or right-to-left. "Scrolling" does not change the layout of the text or graphics, but rather, incrementally moves portions of a larger image into and/or out of the user's view on the display screen, where the entirety of the larger image is not viewable on the display screen at a present level of magnification. Also, a "scrolling input" refers to movement of a user input object on a touch-sensitive interface from top-to-bottom, bottom-to-top, left-to-right, right-to-left, or diagonally between the aforementioned directions. The direction, speed, and/or amount of scrolling may be based on the direction, speed, and/or distance of the scrolling input on the display screen, respectively. As used herein, an "amount of scrolling" refers to the portion or percentage of the larger image that is moved across the display screen in response to a scrolling input, while a "speed of scrolling" or "scrolling speed" refers to the relative rate at which the portions of the larger image are moved across the display screen in response to a scrolling input.

Some embodiments of the present invention arise from realization that, for a relatively long text and/or graphics file (such as a list of entries) that is not viewable in its entirety on a display screen, scrolling a fixed or same amount of the list responsive to each user touch input may allow for relatively high accuracy in scrolling at the expense of speed in navigating the list. Accordingly, some embodiments of the present invention provide different amounts and/or speeds of scrolling based on the location on the touch-sensitive interface at which the scrolling input is received. In particular, a touch-sensitive interface may include multiple regions, each having a different level of sensitivity or responsiveness to a received scrolling input, such that the distance of movement of the scrolling input on the touch-sensitive interface represents a different amount of the text and/or graphics to be scrolled depending on the region at which the scrolling input is received. For example, a relatively small movement received at a higher-sensitivity region may result in scrolling of a greater portion of the text and/or graphics than a similar movement received at the lower-sensitivity region. As such, the percentage of the text and/or graphics that is scrolled on the display screen may be dependent on the location on the touch-sensitive interface at which the scrolling input is received, to improve both navigation speed (responsive to scrolling inputs at the higher-sensitivity region) and scrolling accuracy (responsive to scrolling inputs at the lower-sensitivity region).

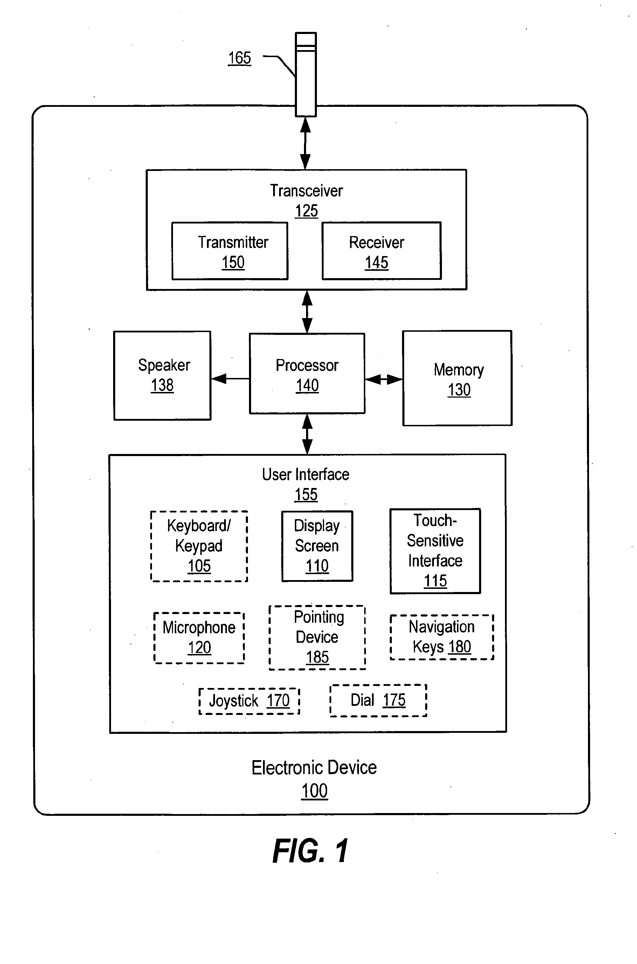

**Figure 1** is a block diagram illustrating an electronic device with multi-region touch scrolling in accordance with some embodiments of the present invention. Referring now to **Figure 1****,** an exemplary electronic device **100** includes a transceiver **125,** memory **130,** a speaker **138,** a processor **140,** and a user interface **155.** The transceiver **125** typically includes a transmitter circuit **150** and a receiver circuit **145** that cooperate to transmit and receive radio frequency signals to and from base station transceivers via an antenna **165.** The radio frequency signals transmitted between the electronic device **100** and the base station transceivers may include both traffic and control signals (*e.g*., paging signals/messages for incoming calls), which are used to establish and maintain communication with another party or destination. The radio frequency signals may also include packet data information, such as, for example, cellular digital packet data (CDPD) information. In addition, the transceiver **125** may include an infrared (IR), Bluetooth, and/or Wi-Fi transceiver configured to transmit/receive signals to/from other electronic devices.

The memory **130** may represent a hierarchy of memory that may include volatile and/or non-volatile memory, such as removable flash, magnetic, and/or optical rewritable non-volatile memory. The memory **130** may be configured to store several categories of software, such as an operating system, applications programs, and input/output (I/O) device drivers. The operating system may control the management and/or operation of system resources and may coordinate execution of programs by the processor **140**. The I/O device drivers typically include software routines accessed through the operating system by the application programs to communicate with input/output devices, such as those included in the user interface **155** and/or other components of the memory **130**.

The processor **140** is coupled to the transceiver **125**, the memory **130**, the speaker **138**, and the user interface **155**. The processor **140** may be, for example, a commercially available or custom microprocessor that is configured to coordinate and manage operations of the transceiver **125**, the memory **130**, the speaker **138**, and/or the user interface **155**.

The user interface **155** may include a microphone **120**, a display screen **110** (such as a liquid crystal display), a touch sensitive interface **115**, a joystick **170**, a keyboard/keypad **105**, a dial **175**, directional navigation key(s) **180**, and/or a pointing device **185** (such as a mouse, trackball, etc.). However, depending on functionalities offered by the electronic device **100**, additional and/or fewer elements of the user interface **155** may actually be provided. For instance, the touch sensitive interface **115** may be implemented as an overlay on the display screen **110** to provide a touch-sensitive display screen (or "touch screen") in some embodiments. More generally, while particular functionalities are shown in particular blocks by way of illustration, functionalities of different blocks and/or portions thereof may be combined, divided, and/or eliminated.

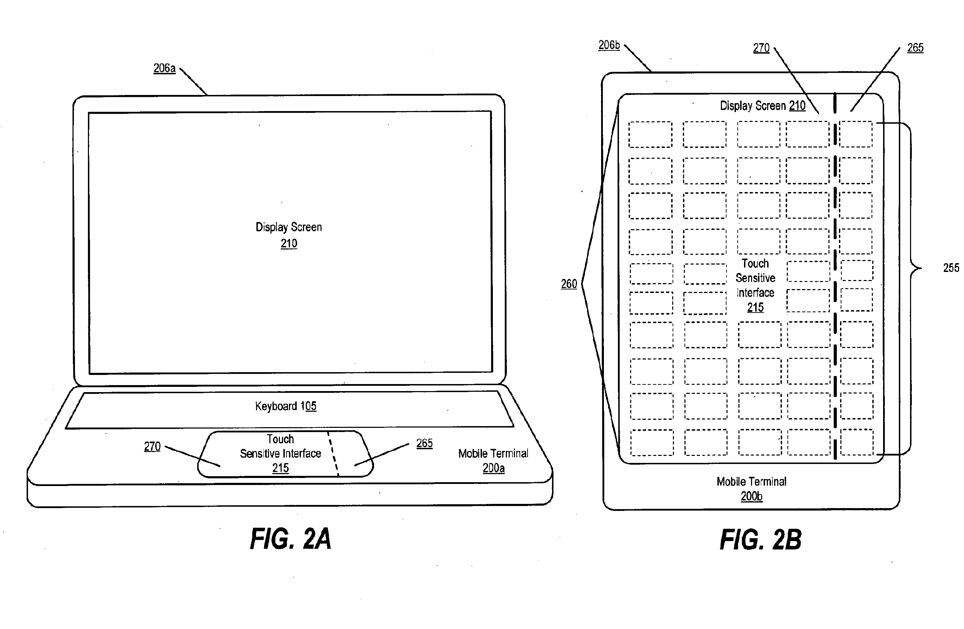

**Figures 2A** and **2B** illustrate example configurations of electronic devices (such as the electronic device **100** of **Figure 1**) that provide multi-region touch scrolling in accordance with some embodiments of the present invention. As such, the user interfaces and/or other elements of **Figures 2A** and/or **2B** may be similar to the user interface **155** and/or other elements of **Figure 1****.** In particular, **Figure 2A** illustrates a mobile terminal 200a (shown as a laptop computer) where the user interface is implemented as a separate keyboard **205**, display screen **210**, and touch sensitive interface **215** in a housing **206a**, while **Figure 2B** illustrates a mobile terminal **200b** (shown as a mobile phone) where the user interface is implemented as a display screen **210** underlying a touch sensitive interface **215** to provide a touch screen display **260** in a housing **206b.**

Referring now to **Figures 2A** and **2B**, the touch-sensitive interface **215** includes an array of sensors **255** that are operable to receive a scrolling input from a user input object and generate a touch signal in response to the scrolling input. In particular, the array of touch sensors **255** may be operable to detect the touch and/or directional movements of a user input object, such as a stylus or digit of a human hand (i.e., a thumb or finger) on the touch-sensitive interface **215**. The touch signal generated by the sensors **255** may also be used to identify the corresponding location(s) (e.g., coordinate locations) of the touch-sensitive interface **215** at which the input is received (e.g., where a user is touching the touch-sensitive interface **215**), the distance of movement of the user input object on the touch-sensitive interface **215**, and/or the speed of movement of the user input object.

The touch-sensitive interface also includes a first region **265** and a second region **270**. While a dashed line is shown in **Figures 2A** and **2B** to differentiate the first region **265** and the second region **270** for purposes of illustration, it will be understood that there may be no visual separation or visual distinction between the first and second regions **265** and **270** in some embodiments. A processor included in the mobile terminal **200a** and/or **200b** (such as the processor **140** of **Figure 1**) may be operable to detect a scrolling input received at the first or second region **265** and **270** based on the touch signal(s) provided by particular ones of the sensors **255** underlying the first and second regions **265** and **270** and interpret the scrolling input differently depending on the region at which it was received. In some embodiments, the processor may detect the location at which the scrolling input is received on the touch-sensitive interface **215** based on known coordinates of the sensor(s) **255** from which the touch signal is received. In additional or alternative embodiments, ones of the sensors **255** underlying the first region **265** may generate a touch signal of a different type or magnitude in response to the scrolling input than ones of the sensors **255** underlying the second region **270**, and the processor may detect the scrolling input at the first region **265** and/or the second region **270** in response to the different touch signals. In further additional or alternative embodiments, different types or numbers of the sensors **255** may be provided in the first and second regions **265** and **270** to differentiate the touch signals generated thereby in response to a scrolling input. Thus, the processor may determine the location of at which a scrolling input is received on the touch-sensitive interface **215** responsive to the touch signals.

Still referring to **Figures 2A** and **2B**, the processor is operable to provide a different amount of scrolling of the text and/or graphics shown on the display screen **210** in response to the same scrolling input (e.g., a scrolling input having similar characteristics, such as length, direction, duration, speed, etc.), based on the detected location on the touch-sensitive interface **215** at which the scrolling input is received. For example, the processor may detect a distance of movement of the scrolling input on the touch sensitive interface **215** based on the touch signal (for example, by calculating the difference between the starting point and ending point of the user input object), and may correlate the detected distance to a greater amount of the text and/or graphics to be scrolled responsive to detecting the scrolling input at the first region **265** than at the second region **270**. The processor may also detect a speed of movement of the scrolling input, and may correlate the detected speed to a greater speed for scrolling the text and/or graphics responsive to detecting the scrolling input at the first region **265** than at the second region **270**. As such, the processor associates scrolling and/or other inputs received at the first region **265** of the touch sensitive interface **215** with a greater degree of responsiveness or sensitivity than inputs received at the second region **270**.

In some embodiments, the processor may correlate the detected distance of movement of the user input object on the touch-sensitive interface **215** according to different sensitivity ratios depending on whether the scrolling input is detected at the first region **265** or at the second region **270**. The sensitivity ratios may associate respective scrollable areas of the first and second region with different percentages of a displayed document. As such, a scrollable area of the first region **265** may represent a greater percentage of a displayed document than the scrollable area in the second region **270.** For example, the first region **265** may have a 1:1 sensitivity ratio that associates the scrollable area of the first region **265** with an entirety (e.g., 100%) of the document, while the second region **270** may have a 4:1 sensitivity ratio that associates the scrollable area in the second region **270** with a fraction (for example, about 25%) of the displayed document. The processor may further determine the distance of the scrolling input relative to the scrollable area of the first and second regions **265** and **270**, and may thereby relate the distance of the scrolling input to different amounts of scrolling based on whether the scrolling input is detected at the first region **265** or the second region **270**. For example, detection of a relatively short scrolling input in the first region **265** (for instance, having a distance of about 25% of the first scrollable area) may provide scrolling of about 25% of the displayed document, while detection of a similar scrolling input in the second region **270** (e.g., having a distance of about 25% of the second scrollable area) may provide scrolling of about 6.25% of the displayed document. Likewise, detection of a scrolling input having a distance approximately equal to the first scrollable area may provide scrolling of the entire document when detected in the first region **265**, while detection of four (4) of such scrolling inputs in the second scrollable area may be required to scroll through the entire document when detected in the second region **270**. Thus, a scrolling input of a given distance of movement provides a greater amount of scrolling when detected at the first region **265** than when detected at the second region **270**.

As such, a scrolling input may allow for scrolling of up to the entirety of the document or less when detected at the first region **265**, while the same scrolling input may allow for scrolling of up to only a fraction of the document (and thus, may preclude scrolling of more than the fraction of the document) when detected at the second region **270**. Consequently, a user may navigate through a relatively long document at a greater speed by providing scrolling inputs at the first region **265** rather than at the second region **270**. Conversely, a user may more precisely navigate through a portion of the document at a slower speed by providing scrolling inputs at the second region **270** rather than at the first region **265**. The speed of scrolling of the text and/or graphics on the display screen **210** may also be varied based on the detected speed of movement of the user input object that defines the scrolling input in some embodiments. However, some embodiments of the present invention may provide a faster scrolling speed in response to detecting scrolling inputs in the first region **265** than in response to detecting scrolling inputs in the second region **270** independent or regardless of the detected speed or rate of the scrolling input.

In addition, scrolling inputs may be received at both the first region **265** and the second region **270** substantially simultaneously, and the amount and/or speed of scrolling ma be varied based on the combination of scrolling inputs. For example, where scrolling inputs received at the first region **265** are associated with a scrolling speed that is twice the scrolling speed associated with scrolling inputs received at the second region **270**, the combination of scrolling inputs may provide at additive or multiplicative effect on the scrolling speed of the text and/or graphics in response to detection of the scrolling inputs at the first and second regions **265** and **270** substantially simultaneously.

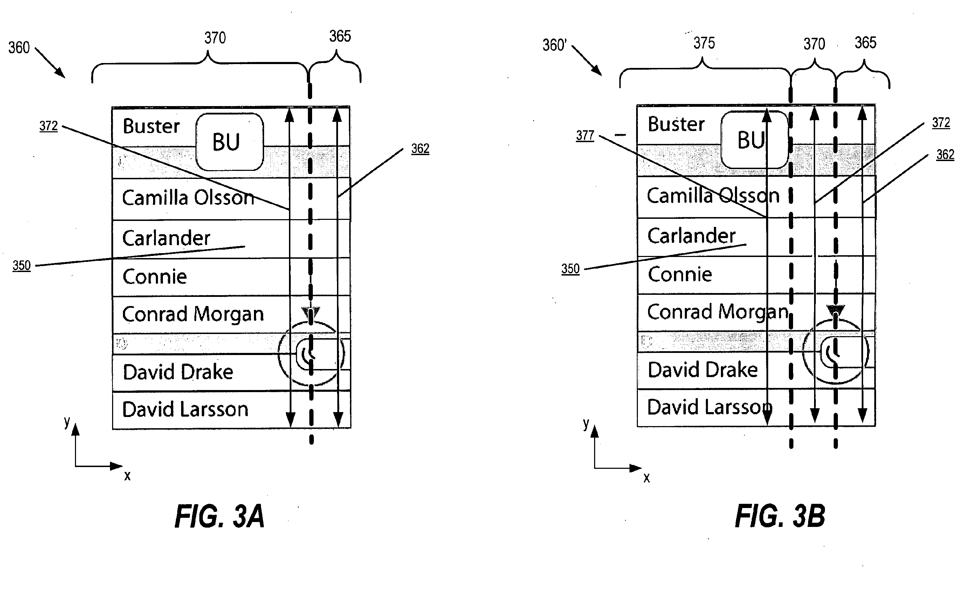

**Figures 3A** and **3B** illustrate examples of touch screen displays **360** and **360'** according to some embodiments of the present invention. The touch screens **360** and/or **360'** may be similar to the touch screen **260** described above with reference to **Figure 2B**. As shown in **Figure 3A**, the touch screen **360** includes a first region **365** having a first scrollable area **362** on the right side of the touch screen display **360,** and a second region **370** having a second scrollable area **372** to the left of the first region **365**. As such, the first and second regions **365** and **370** have different x-coordinates along an x-axis of the touch screen **360**, defining first and second columns on the touch screen **360**. The scrolling inputs provided by moving a user input object within the scrollable lengths **362** and **372** have substantially similar y-coordinates along a y-axis of the touch screen **360** within the first and/or second columns. The touch screen **360'** of **Figure 3B** further includes a third region **375** having a third scrollable area **377** to the left of the second region **370**, where the first, second, and third regions **365, 370,** and **375** have different x-coordinates along the x-axis of the touch screen **360',** thereby defining first, second, and third columns on the touch screen **360'.**

Accordingly, scrolling inputs received at different locations along the x-axis of the touch screens **360** and/or **360'** may be interpreted differently by a processor (such as the processor **140** of **Figure 1**) to provide different amounts of scrolling of a displayed list of alphanumeric entries **350** (illustrated in **Figures 3A** and **3B** as a contact list). In particular, as discussed above with reference to the first and second regions **265** and **270** of **Figures 2A** and **2B**, each of the regions **365**, **370**, and **375** may be associated with a different sensitivity ratio relating the respective scrollable areas **362**, **372**, and **377** with different percentages of the displayed list **350**. As such, moving a user input object from top to bottom of the scrollable area **362** in the first region **365** provides scrolling of nearly an entirety of the displayed list **350**. In contrast, moving the user input object by a similar distance in the second region **370** (e.g., from top to bottom of the scrollable area **372**) provides scrolling of only a portion or a fraction (for example, about one-fourth) of the list **350**. Accordingly, a user may quickly find a desired approximate position in the list **350** by scrolling with a finger or other user input object in the higher-sensitivity scrolling region **365** to the right side of the touch screen **360**, and, when more detailed scrolling is desired, the user may move the finger to the left into the lower sensitivity scrolling region **370** of the touch screen **360** for more accurate scrolling. Moving the user input object from top to bottom of the scrollable area **377** in the third region 375 may provide scrolling of an even smaller portion (for example, about one-tenth) of the list **350**. As the first, second, and third regions **365**,**370**, and/or **375** are immediately adjacent one another on the touch screens **360** and/or **360'**, the user may transition between the first and second regions **365** and **370** or between the second and third regions **370** and **375** when scrolling without lifting the finger or other user input object from the surface of the touch screen **360** or **360'**, and thus, can find a desired list entry with a single movement. Also, scrolling inputs maybe received substantially simultaneously in two or more of the first, second, and third regions **365**, **370** and **375** using multiple user input objects, and the scrolling inputs may be interpreted in combination to further vary the amount and/or speed of scrolling. In particular, a user may scroll substantially simultaneously in both the second region **370** and the third region **375** using two fingers, where the second and third regions **370** and **375** are associated with different scrolling speeds and/or different amounts of the list **350**. In response to detection of the scrolling inputs in both the second and third regions **370** and **375** at the same time, the processor may additively or multiplicatively combine the scrolling speeds and/or amounts of the list **350** associated with each of the regions **370** and **375** and may provide an amount and/or speed of scrolling in accordance with the combination. For examples where the second region **370** is associated with a 'level 4' scrolling speed and the third region **375** is associated with a 'level 2' scrolling speed, simultaneous scrolling inputs in the second and third regions **370** and **375** would provide scrolling of the list **350** at a 'level 6' scrolling speed. Likewise, where the scrollable area **372** of the second region **370** is associated with about 25% of the list **350** and the scrollable area **377** of the third region **375** is associated with about 10% of the list **350** simultaneous scrolling inputs from top to bottom of the scrollable areas in the second and third regions **370** and **375** would provide scrolling of about 35% of the list **350**.

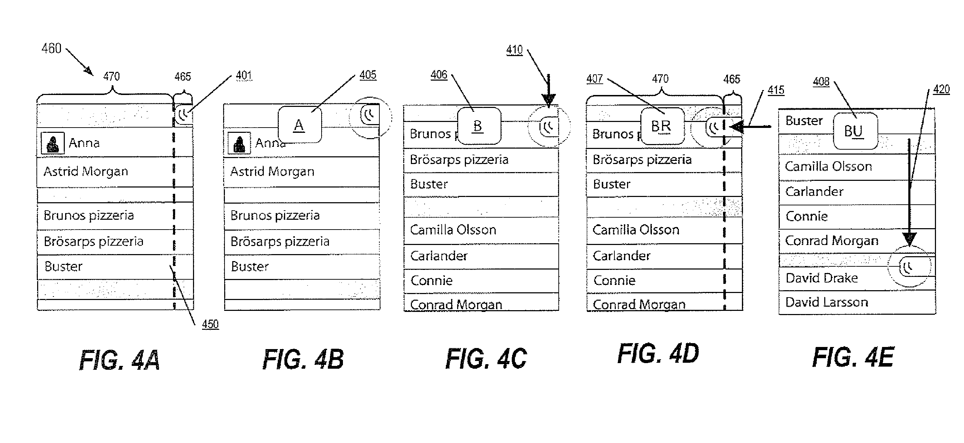

Figures **4A** to **4E** illustrate an example of multi-region touch scrolling on an electronic device including a touch screen **460** having first and second scrolling regions **465** and **470** according to further embodiments of the present invention. The touch screen **460** may be configured to operate and/or may be otherwise similar to the touch screen **360** of **Figure 3A****.** As shown in **Figures 4A** to **4E****,** the touch screen **460** displays a contact list **450** having a plurality of entries, including names of people and places or businesses of interest to a user of the device. The first region **465** of the touch screen **460** may have a sensitivity ratio of about 1:1 that associates the scrollable area of the first region **465** with an entirety (e.g., about 100%) of the list **450**, while the second region **470** may have a sensitivity ratio of about 10:1 that associates the scrollable area of the second region **470** with a smaller portion (e.g., about 10%) of the list **450**.

Referring now to **Figure 4A**, a user input object **401** is placed in contact with the first region **465** at a top portion of the touch screen **460.** As shown in **Figure 4B**, a first letter "A" **405** of one or more of the currently-displayed entries of the list **450** is highlighted in response to detection of the user input object **401** on the surface of the touch screen **460.** The user input object **401** is then moved from the top portion of the touch screen **460** in a downward direction toward the bottom portion by a distance **410** in **Figure 4C**, defining a scrolling input on the first region **465**. The portion of the list **450** including entries that begin with the letter "A" is scrolled across the touch screen **460** in response to detection of the scrolling input at the first region **465** (and based on the distance **410** of the scrolling input in relation to the scrollable length and the sensitivity ratio of the first region **465**), such that the portions of the list **450** including entries that begin with the letters "B" and "C" are currently displayed on the touch screen **460.** A first letter "B" **406** of one or more of the currently-displayed entries of the list **450** is also highlighted in response to detection of the scrolling input at the first region **465.**

Referring now to **Figure 4D**, the user input object **401** is moved in a lateral direction from the first region **465** into the immediately adjacent second region **470** by a distance **415** to define a transition input, and a second letter "R" **407** of the currently-displayed entries of the list **450** is highlighted in response to detection of the transition input. As shown in **Figure 4E**, the user input object **401** is moved from the top portion of the touch screen **460** in a downward direction toward the bottom portion by a distance **420**, defining a scrolling input on the second region **470**. The portion of the list **450** including entries that begin with the letter "B" is scrolled across the touch screen **460** in response to detection of the scrolling input at the second region **470** (and based on the distance **420** of the scrolling input in relation to the scrollable length and the sensitivity ratio of the second **region 470**), such that the portions of the list **450** including entries that begin with the letters "C" and "D" are currently displayed on the touch screen **460**. A second letter "U" **408** of one or more of the currently-displayed entries of the list **450** is also highlighted in response to detection of the scrolling input at the second region **470**. Accordingly, scrolling inputs received at the first region **465** allow for relatively fast navigation of the list **450** to locate a portion of interest, while scrolling inputs received at the second region **470** allow for more precise navigation of the particular portion of interest in the list **450**.

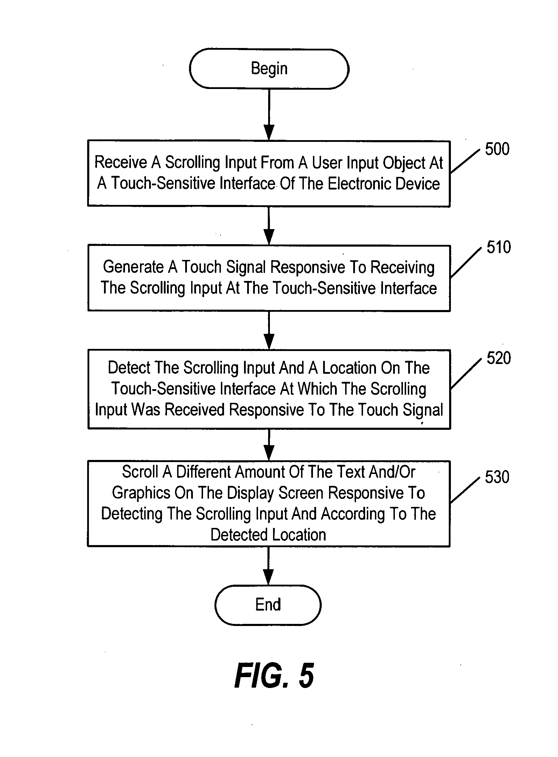

**Figure 5** is a flow diagram illustrating an example control sequence for operating an electronic device, such as any of the electronic devices described above with reference to **Figures 1-4**, to provide multi-region touch scrolling of text and/or graphics on a display screen in accordance with some embodiments of the present invention. Referring now to **Figure 5**, operations begin at Block **500** when a scrolling input is received from a user input object at a touch-sensitive interface of the electronic device. A touch signal is generated responsive to receiving the scrolling input at Block **510**. The scrolling input, as well as a location on the touch-sensitive interface at which the scrolling input was received, is thereby detected in response to the touch signal at Block **520**. For example, the scrolling input may be detected at a first region or a second region of the touch-sensitive interface, each of which may be associated with a different level of sensitivity or responsiveness to the scrolling input. A distance and/or speed of movement of the user input object on the touch-sensitive interface that was used to define the scrolling input may also be detected.

Still referring to **Figure 5**, in response to detection of the scrolling input, a different amount of the text and/or graphics is scrolled on the display screen according to the location on the touch-sensitive interface at which the scrolling input was detected at Block **530**. In particular, a greater amount of the text and/or graphics may be scrolled responsive to detection of the scrolling input at the first region than at the second region. For example, the first region of the touch-sensitive interface may be associated with a greater percentage of the text and/or graphics than the second region, such that the distance of movement of the user input object on the first region is correlated to a greater portion of the text and/or graphics (and thus, results in a greater amount of scrolling) than a scrolling input of a same distance on the second region. The text and/or graphics may also be scrolled at a greater speed responsive to detection of the of the scrolling input at the first region than at the second region. The speed of scrolling of the text and/or graphics on the display screen may be varied based on the speed of movement of the user input object on the touch-sensitive display, or may be provided at a greater speed when the scrolling input is detected at the first region than when the scrolling input is detected at the second region regardless of the speed of movement of the user input object in some embodiments.

Accordingly, embodiments of the present invention including multiple touch-sensitive regions having different levels of responsiveness to scrolling input may allow for improved scrolling by combining a higher-sensitivity region for faster navigation and a lower-sensitivity region for more precise scrolling. Embodiments of the present invention may be used in any devices that include a touch-sensitive interface, such as personal digital assistants (PDAs), mobile phones, laptop computers, desktop computers, and the like.

[0059] Many variations and modifications can be made to the preferred embodiments without substantially departing from the principles of the present invention. All such variations and modifications are intended to be included herein within the scope of the present invention, as set forth in the following claims.

## Claims

1. An electronic device (100), comprising:
a user interface (155) comprising a display screen (110) operable to display text and/or graphics and a touch-sensitive interface (115) comprising an array of sensors (255) operable to receive a scrolling input from a user input object and generate a touch signal in response thereto; and
a processor (140) coupled to the user interface (155) and operable to detect the scrolling input and a location on the touch-sensitive interface (115) at which the scrolling input was received responsive to the touch signal, to scroll a first amount of the text and/or graphics on the display screen (110) responsive to detection of the scrolling input at a first region (265) on the touch-sensitive interface (115) and independently of a speed of the scrolling input, and to scroll a second amount of the text and/or graphics that is less than the first amount on the display screen (110) responsive to detection of the same scrolling input at a second region (270) on the touch-sensitive interface (115) and independently of the speed of the scrolling input, wherein:
the text and/or graphics comprises a plurality of alphanumeric entries, wherein the electronic device (100) is **characterized in that** the processor (140) is operable to highlight a leftmost character of a topmost entry of the plurality of entries that is currently displayed on the display screen (110) responsive to detection of the scrolling input at the first region (265);
the processor (140) is operable to detect a transition input indicating movement of the user input object from the first region (265) to the second region (270) responsive to the touch signal, and the processor (140) is operable to highlight on the display screen (110) a subsequent character of the displayed one of the plurality of entries responsive to detection of the transition input; and
the processor (140) is operable to scroll only ones of the plurality of entries having the same leftmost character as the displayed one of the plurality of entries responsive to detection of the scrolling input at the second region (270) subsequent to detection of the transition input.

2. The electronic device (100) of Claim 1, wherein the processor (140) is operable to detect a distance of movement of the scrolling input on the touch-sensitive interface (115) responsive to the touch signal, to correlate the distance of movement to the first amount of the text and/or graphics according to a first sensitivity ratio responsive to detection of the scrolling input at the first region (265), and to correlate the distance of movement to the second amount of the text and/or graphics according to a second sensitivity ratio responsive to detection of the same scrolling input at the second region (270).

3. The electronic device (100) of Claim 2, wherein:
the first sensitivity ratio associates a scrollable area of the first region (265) with a first percentage of the text and/or graphics, and the second sensitivity ratio associates a scrollable area of the second region (270) with a second percentage of the text and/or graphics that is less than the first percentage so that the distance of movement of the scrolling input represents a greater amount of the text and/or graphics responsive to detection thereof at the first region (265) than at the second region (270); or
the first sensitivity ratio associates a scrollable area of the first region (265) with an entirety of the text and/or graphics, the second sensitivity ratio associates a scrollable area of the second region (270) with a fraction of the text and/or graphics, the processor (140) is operable to scroll less than or up to the entirety of the text and/or graphics responsive to detection of the scrolling input at the first region (265), and the processor (140) is operable to preclude scrolling of more than the fraction of the text and/or graphics responsive to detection of the same scrolling input at the second region (270).

4. The electronic device (100) according to any one of claims 1-3, wherein the processor (140) is operable to scroll the first amount of the text and/or graphics on the display screen (110) at a greater scrolling speed than the second amount of the text and/or graphics.

5. The electronic device (100) according to any one of claims 1-4, wherein:
the second region (270) is immediately adjacent to the first region (265) on the touch-sensitive interface (115) such that the touch-sensitive interface (115) is operable to receive the scrolling input at the first and/or second regions (265, 270) without lifting of the user input object from the touch-sensitive interface (115); or
the touch sensitive interface further comprises a third region, and wherein the processor (140) is operable to scroll a third amount of the text and/or graphics that is less than the second amount on the display screen (110) responsive to detection of the same scrolling input at the third region.

6. The electronic device (100) according to any one of claim 1-5, wherein:
ones of the array of sensors (255) underlying the first region (265) are operable to generate a different touch signal responsive to receiving the scrolling input than ones of the array of sensors (255) underlying the second region (270); or
ones of the array of sensors (255) underlying the first region (265) are greater in number than ones of the array of sensors (255) underlying the second region (270).

7. The electronic device (100) according to any one of claims 1-6, wherein the processor (140) is operable to detect the scrolling input as being received at both the first region (265) and the second region (270) of the touch-sensitive interface (115), and wherein the processor (140) is operable to scroll a third amount of the text and/or graphics responsive thereto.

8. The electronic device (100) of Claim 7, wherein the processor (140) is operable to detect the scrolling input as a combination of a first scrolling input received via a first user input object and a second scrolling input received via a second user input object.

9. The electronic device (100) of Claim 7, wherein:
the third amount of text and/or graphics comprises a sum or a product of the first amount and the second amount of the text and/or graphics; or
the processor (140) is operable to scroll the third amount of text at a third scrolling speed, wherein the third scrolling speed comprises a sum or a product of a first scrolling speed associated with the first region (265) and a second scrolling speed associated with the second region (270).

10. A method of operating an electronic device to control scrolling of text and/or graphics on a display screen (110) thereof, the method comprising:
receiving (500) a scrolling input from a user input object at a touch-sensitive interface (115) of the electronic device;
generating (510) a touch signal responsive to receiving the scrolling input at the touch-sensitive interface (115);
detecting (520) the scrolling input and a location on the touch-sensitive interface (115) at which the scrolling input was received responsive to the touch signal;
scrolling (530) a first amount of the text and/or graphics on the display screen (110) responsive to detecting the scrolling input at a first region (265) on the touch-sensitive interface (115) and independently of the speed of the scrolling input; and
scrolling (530) a second amount of the text and/or graphics that is less than the first amount on the display screen (110) responsive to detecting the same scrolling input at a second region (270) on the touch-sensitive interface (115) and independently of the speed of the scrolling input, wherein
the text and/or graphics comprises a plurality of alphanumeric entries, and wherein the method is **characterized by**:
highlighting a leftmost character of a topmost entry of the plurality of entries that is currently displayed on the display screen (110) responsive to detection of the scrolling input at the first region (265);
detecting a transition input indicating movement of the user input object from the first region (265) to the second region (270) responsive to the touch signal, and
highlighting on the display screen (110) a subsequent character of the displayed one of the plurality of entries responsive to detection of the transition input; and
scrolling only ones of the plurality of entries having the same leftmost character as the displayed one of the plurality of entries responsive to detection of the scrolling input at the second region (270) subsequent to detection of the transition input.

11. The method of Claim 10, further comprising:
detecting a distance of movement of the scrolling input on the touch-sensitive interface (115) responsive to the touch signal;
correlating the distance of movement to the first amount of the text and/or graphics according to a first sensitivity ratio responsive to detecting the scrolling input at the first region (265); and
correlating the distance of movement to the second amount of the text and/or graphics according to a second sensitivity ratio responsive to detecting the same scrolling input at the second region (270).

12. The method of Claim 10 or 11, further comprising:
scrolling the first amount of the text and/or graphics on the display screen (110) at a greater scrolling speed than the second amount of the text and/or graphics.

13. The method according to any one of claims 10-12, wherein detecting the scrolling input comprises
detecting the scrolling input as being received at both the first region (265) and the second region (270) of the touch-sensitive interface (115), and further comprising:
scrolling a third amount of the text and/or graphics responsive to detecting the scrolling input as being received at both the first region (265) and the second region (270).

14. The method of Claim 13, wherein:
the third amount of text and/or graphics comprises a sum or a product of the first amount and the second amount of the text and/or graphics; or
the third amount of text is scrolled a third scrolling speed that comprises a sum or a product of a first scrolling speed associated with the first region (265) and a second scrolling speed associated with the second region (270).

15. A computer program product for operating an electronic device to control scrolling of text and/or graphics on a display screen (110) thereof, the computer program product comprising:
a computer readable storage medium having computer readable program code embodied in said medium, said computer readable program code comprising:
computer readable program code that, when executed, detects a scrolling input from a user input object at a touch-sensitive interface (115) of the electronic device;
computer readable program code that, when executed, generates a touch signal responsive to the scrolling input;
computer readable program code that, when executed, interprets the scrolling input and determines a location on the touch-sensitive interface (115) at which the scrolling input was received responsive to the touch signal; and
computer readable program code that, when executed, scrolls a first amount of the text and/or graphics on the display screen (110) responsive to detecting the scrolling input at a first region (265) on the touch-sensitive interface (115); and scrolls a second amount of the text and/or graphics that is less than the first amount on the display screen (110) responsive to detecting the same scrolling input at a second region (270) on the touch-sensitive interface (115) and independently of a speed of the scrolling input, wherein
the text and/or graphics comprises a plurality of alphanumeric entries, and wherein the computer readable program code is **characterized by**:
computer readable program code that, when executed, highlights a leftmost character of a topmost entry of the plurality of entries that is currently displayed on the display screen (110) responsive to detection of the scrolling input at the first region (265);
computer readable program code that, when executed, detects a transition input indicating movement of the user input object from the first region (265) to the second region (270) responsive to the touch signal, and
computer readable program code that, when executed, highlights on the display screen (110) a subsequent character of the displayed one of the plurality of entries responsive to detection of the transition input; and
computer readable program code that, when executed, scrolls only ones of the plurality of entries having the same leftmost character as the displayed one of the plurality of entries responsive to detection of the scrolling input at the second region (270) subsequent to detection of the transition input.

## Patentansprüche

1. Eine elektronische Vorrichtung (100) umfassend:
eine Benutzerschnittstelle (155) umfassend eine zum Anzeigen von Text und/oder Grafiken betreibbare Bildschirmanzeige (110) und eine berührungsempfindliche Schnittstelle (115) umfassend eine Anordnung von Sensoren (255), welche zum Empfangen einer Bildlaufeingabe von einem Benutzereingabeobjekt und zum Erzeugen eines Berührungssignals als Antwort darauf betreibbar ist; und
einen Prozessor (140), welcher mit der Benutzerschnittstelle (155) gekoppelt ist und betreibbar ist zum Erkennen der Bildlaufeingabe und einer Position auf der berührungsempfindlichen Schnittstelle (115), auf welchem die Bildlaufeingabe empfangen wurde, in Reaktion auf das Berührungssignal, zum Durchlaufen eines ersten Betrags des Texts und/oder Grafiken auf der Bildschirmanzeige (110) in Reaktion auf ein Erkennen der Bildlaufeingabe in einem ersten Bereich (265) auf der berührungsempfindlichen Schnittstelle (115) und unabhängig von einer Geschwindigkeit der Bildlaufeingabe, und zum Durchlaufen eines zweiten Betrags des Texts und/oder Grafiken, welcher geringer als der erste Betrag ist, auf der Bildschirmanzeige (110) in Reaktion auf ein Erkennen derselben Bildlaufeingabe in einem zweiten Bereich (270) auf der berührungsempfindlichen Schnittstelle (115) und unabhängig von der Geschwindigkeit der Bildlaufeingabe, wobei:
der Text und/oder Grafiken eine Vielzahl von alphanumerischen Einträgen beinhaltet, wobei die elektronische Vorrichtung (100) **dadurch gekennzeichnet** ist,
dass der Prozessor (140) zum Hervorheben eines sich ganz links befindlichen Zeichens eines ganz oben liegenden Eintrags der Vielzahl von Einträgen, welche aktuell auf der Bildschirmanzeige (110) angezeigt wird, in Reaktion auf ein Erkennen der Bildlaufeingabe an dem ersten Bereich (265) betreibbar ist;
der Prozessor (140) zum Erkennen einer Übergangseingabe, welche eine Bewegung des Benutzereingabeobjekts von dem ersten Bereich (265) zu dem zweiten Bereich (270) anzeigt, in Reaktion auf das Berührungssignal betreibbar ist und der Prozessor (140) zum Hervorheben auf dem Anzeigebildschirm (110) eines sich auf dasjenige von der Vielzahl von Einträgen angezeigte anschließende Zeichen in Reaktion auf ein Erkennen der Übergangseingabe betreibbar ist; und
der Prozessor (140) zum Durchlaufen von nur denjenigen der Vielzahl von Einträgen, welche dasselbe sich ganz links befindliche Zeichen als das von der Vielzahl von Einträgen angezeigte aufweisen, in Reaktion auf ein dem Erkennen der Übergangseingabe nachfolgenden Erkennen der Bildlaufeingabe an dem zweiten Bereich (270) betreibbar ist.

2. Die elektronische Vorrichtung (100) aus Anspruch 1, wobei der Prozessor (140) zum Erkennen eines Abstands einer Bewegung der Bildlaufeingabe auf der berührungsempfindlichen Schnittstelle (115) in Reaktion auf das Berührungssignal, zum Korrelieren des Abstands der Bewegung zu dem ersten Betrag des Texts und/oder Grafiken entsprechend einem ersten Empfindlichkeitsverhältnisses in Reaktion auf ein Erkennen der Bildlaufeingabe an dem ersten Bereich (265) und zum Korrelieren des Abstands der Bewegung des zweiten Betrags des Texts und/oder Grafiken entsprechend einem zweiten Empfindlichkeitsverhältnisses in Reaktion auf ein Erkennen derselben Bildlaufeingabe an dem zweiten Bereich (270) betreibbar ist.

3. Die elektronische Vorrichtung (100) aus Anspruch 2, wobei:
das erste Empfindlichkeitsverhältnis einen durchlaufbaren Bereich des ersten Bereichs (265) mit einem ersten Anteil des Texts und/oder Grafiken verknüpft und das zweite Empfindlichkeitsverhältnis einen durchlaufbaren Bereich des zweiten Bereichs (270) mit einem zweiten Anteil des Texts und/oder Grafiken verknüpft, welcher geringer als der erste Anteil ist, sodass der Abstand einer Bewegung der Bildlaufeingabe einen größeren Betrag des Texts und/oder Grafiken in Reaktion auf ein Erkennen davon auf dem ersten Bereich (265) als auf dem zweiten Bereich (270) darstellt; oder
das erste Empfindlichkeitsverhältnis einen durchlaufbaren Bereich des ersten Bereichs (265) mit einer Gesamtheit des Texts und/oder Grafiken verknüpft, dass zweite Empfindlichkeitsverhältnis einen durchlaufbaren Bereich des zweiten Bereichs (270) mit einem Bruchteil des Texts und/oder Grafiken verknüpft, der Prozessor (140) zum Durchlaufen von weniger oder bis zu der Gesamtheit des Texts und/oder Grafiken in Reaktion auf ein Erkennen der Bildlaufeingabe an dem ersten Bereich (265) betreibbar ist und der Prozessor (140) zum Verhindern eines Durchlaufens von mehr als dem Bruchteil des Texts und/oder Grafiken in Reaktion auf ein Erkennen derselben Bildlaufeingabe an dem zweiten Bereich (270) betreibbar ist.

4. Die elektronische Vorrichtung (100) gemäß einem der Ansprüche 1-3, wobei der Prozessor (140) zum Durchlaufen des ersten Betrags des Texts und/oder Grafiken auf der Bildschirmanzeige (110) mit einer größeren Durchlaufgeschwindigkeit als der zweite Betrag des Texts und/oder Grafiken betreibbar ist.

5. Die elektronische Vorrichtung (100) gemäß einem der Ansprüche 1-4, wobei:
der zweite Bereich (270) unmittelbar benachbart zu dem ersten Bereich (265) auf der berührungsempfindlichen Schnittstelle (115) ist, sodass die berührungsempfindliche Schnittstelle (115) zum Empfangen der Bildlaufeingabe an den ersten und/oder zweiten Bereichen (265, 270) ohne Abheben des Benutzereingabeobjekts von der berührungsempfindlichen Schnittstelle (115) betreibbar ist; oder
die berührungsempfindliche Schnittstelle weiter einen dritten Bereich umfasst und, wobei der Prozessor (140) zum Durchlaufen eines Dritten Betrags des Texts und/oder Grafiken, welcher geringer als der zweite Betrag ist, auf der Bildschirmanzeige (110) in Reaktion auf ein Erkennen derselben Bildlaufeingabe an dem dritten Bereich betreibbar ist.

6. Die elektronische Vorrichtung (100) gemäß einem der Ansprüche 1-5, wobei:
diejenigen der Anordnung von Sensoren (255), welche dem ersten Bereich (265) unterliegen, zum Erzeugen eines Berührungssignals, welches sich von denjenigen der Anordnung von Sensoren (255), welche dem zweiten Bereich (270) unterliegen, unterscheidet, in Reaktion auf ein Empfangen der Bildlaufeingabe betreibbar ist; oder diejenigen der Anordnung von Sensoren (255), welche dem ersten Bereich (265) unterliegen, in einer größeren Anzahl vorgesehen sind, als diejenigen der Anordnung von Sensoren (255), welche dem zweiten Bereich (270) unterliegen.

7. Die elektronische Vorrichtung (100) gemäß einem der Ansprüche 1-6, wobei der Prozessor (140) zum Erkennen der Bildlaufeingabe, wenn diese an beiden, dem ersten Bereich (265) und dem zweiten Bereich (270) der berührungsempfindlichen Schnittstelle (115), empfangen wird, betreibbar ist und, wobei der Prozessor (140) zum Durchlaufen eines dritten Betrags des Texts und/oder Grafiken in Reaktion darauf betreibbar ist.

8. Die elektronische Vorrichtung (100) aus Anspruch 7, wobei der Prozessor (140) zum Erkennen der Bildlaufeingabe als eine Kombination einer über ein erstes Benutzereingabeobjekt empfangenen ersten Bildlaufeingabe und einer über ein zweites Benutzereingabeobjekt empfangenen zweiten Bildlaufeingabe betreibbar ist.

9. Die elektronische Vorrichtung (100) aus Anspruch 7, wobei:
der dritte Betrag des Texts und/oder Grafiken eine Summe oder ein Produkt des ersten Betrags und des zweiten Betrags des Texts und/oder Grafiken beinhaltet; oder
der Prozessor (140) zum Durchlaufen des dritten Betrags des Texts mit einer dritten Durchlaufgeschwindigkeit betreibbar ist, wobei die dritte Durchlaufgeschwindigkeit eine Summe oder ein Produkt einer mit dem ersten Bereich (265) verknüpften ersten Durchlaufgeschwindigkeit und einer mit dem zweiten Bereich (270) verknüpften zweiten Durchlaufgeschwindigkeit umfasst.

10. Ein Verfahren zum Betreiben einer elektronischen Vorrichtung zum Steuern eines Durchlaufens eines Texts und/oder Grafiken auf einem Anzeigebildschirm (110) davon, wobei das Verfahren umfasst:
Empfangen (500) einer Bildlaufeingabe von einem Benutzereingabeobjekt auf einer berührungsempfindlichen Schnittstelle (115) der elektronischen Vorrichtung;
Erzeugen (510) eines Berührungssignals in Reaktion auf ein Empfangen der Bildlaufeingabe auf der berührungsempfindlichen Schnittstelle (115);
Erkennen (520) der Bildlaufeingabe und einer Position auf der berührungsempfindlichen Schnittstelle (115), bei welcher die Bildlaufeingabe erhalten wurde, in Reaktion auf das Berührungssignal;
Durchlaufen (530) eines ersten Betrags des Texts und/oder Grafiken auf dem Anzeigebildschirm (110) in Reaktion auf ein Erkennen der Bildlaufeingabe an einem ersten Bereich (265) auf der berührungsempfindlichen Schnittstelle (115) und unabhängig von der Geschwindigkeit der Bildlaufeingabe; und
Durchlaufen (530) eines zweiten Betrags des Texts und/oder Grafiken, welcher geringer als der erste Betrag ist, auf dem Anzeigebildschirm (110) in Reaktion auf ein Erkennen derselben Bildlaufeingabe an einem zweiten Bereich (270) auf der berührungsempfindlichen Schnittstelle (115) und unabhängig von der Geschwindigkeit der Bildlaufeingabe, wobei der Text und/oder Grafiken eine Vielzahl von alphanumerischen Einträgen beinhalten, und wobei das Verfahren **gekennzeichnet ist durch**:
Hervorheben eines sich ganz links befindlichen Zeichens eines ganz oben liegenden Eintrags der Vielzahl von Einträgen, welcher aktuell auf dem Anzeigebildschirm (110) angezeigt wird, in Reaktion auf ein Erkennen der Bildlaufeingabe an dem ersten Bereich (265);
Erkennen einer Übergangseingabe, welche eine Bewegung des Benutzereingabeobjekts von dem ersten Bereich (265) zu dem zweiten Bereich (270) angibt, in Reaktion auf das Berührungssignal, und
Hervorheben auf dem Anzeigebildschirm (110) eines sich auf dasjenige von der Vielzahl von Einträgen angezeigte anschließende Zeichen in Reaktion auf eine Erkennung der Übergangseingabe; und
Durchlaufen von nur denjenigen der Vielzahl von Einträgen, welche dasselbe sich ganz links befindliche Zeichen als das von der Vielzahl von Einträgen angezeigte aufweisen, in Reaktion auf ein dem Erkennen der Übergangseingabe nachfolgenden Erkennen der Bildlaufeingabe an dem zweiten Bereich (270).

11. Das Verfahren aus Anspruch 10 weiter umfassend:
Erkennen eines Abstands einer Bewegung der Bildlaufeingabe auf der berührungsempfindlichen Schnittstelle (115) in Reaktion auf das Berührungssignal;
Korrelieren des Abstands der Bewegung zu dem ersten Betrag des Texts und/oder Grafiken entsprechend einem ersten Empfindlichkeitsverhältnisses in Reaktion auf ein Erkennen der Bildlaufeingabe an dem ersten Bereich (265); und
Korrelieren des Abstands der Bewegung des zweiten Betrags des Texts und/oder Grafiken entsprechend einem zweiten Empfindlichkeitsverhältnisses in Reaktion auf ein Erkennen derselben Bildlaufeingabe an dem zweiten Bereich (270).

12. Das Verfahren aus Anspruch 10 oder 11 weiter umfassend:
Durchlaufen des ersten Betrags des Texts und/oder Grafiken auf der Bildschirmanzeige (110) mit einer größeren Durchlaufgeschwindigkeit als der zweite Betrag des Texts und/oder Grafiken.

13. Das Verfahren gemäß einem der Ansprüche 10-12, wobei ein Erkennen der Bildlaufeingabe umfasst
Erkennen der Bildlaufeingabe, als von beiden, dem ersten Bereich (265) und dem zweiten Bereich (270) der berührungsempfindlichen Schnittstelle (115), empfangen und weiter umfassend:
Durchlaufen eines dritten Betrags des Texts und/oder Grafiken in Reaktion auf ein Erkennen der Bildlaufeingabe, als von beiden, den ersten Bereich (265) und dem zweiten Bereich (270), empfangen.

14. Das Verfahren aus Anspruch 13, wobei:
der dritte Betrag des Texts und/oder Grafiken eine Summe oder ein Produkt des ersten Betrags und des zweiten Betrags des Text und/oder Grafiken umfasst; oder
der dritte Betrag des Texts mit einer dritten Durchlaufgeschwindigkeit durchlaufen wird, welche eine Summe oder ein Produkt einer mit dem ersten Bereich (265) verknüpften ersten Durchlaufgeschwindigkeit und einer mit dem zweiten Bereich (270) verknüpften zweiten Durchlaufgeschwindigkeit umfasst.

15. Ein Computerprogrammprodukt zum Betreiben einer elektronischen Vorrichtung zum Steuern eines Durchlaufens eines Texts und/oder Grafiken auf einem Anzeigebildschirm (110) davon, wobei das Computerprogrammprodukt umfasst:
ein computerlesbares Speichermedium mit einem in dem Medium enthaltenen computerlesbaren Programmcode, wobei der computerlesbare Programmcode umfasst:
computerlesbaren Programmcode, welcher, wenn dieser ausgeführt wird, eine Bildlaufeingabe von einem Benutzereingabeobjekt auf einer berührungsempfindlichen Schnittstelle (115) der elektronischen Vorrichtung erkennt;
computerlesbaren Programmcode, welcher, wenn dieser ausgeführt wird, ein Berührungssignal in Reaktion auf die Bildlaufeingabe erzeugt;
computerlesbaren Programmcode, welcher, wenn dieser ausgeführt wird, die Bildlaufeingabe interpretiert und eine Position auf der berührungsempfindlichen Schnittstelle (115), auf welcher die Bildlaufeingabe empfangen wurde, in Reaktion auf das Berührungssignal bestimmt; und
computerlesbaren Programmcode, welcher, wenn dieser ausgeführt wird, einen ersten Betrag des Texts und/oder Grafiken auf dem Anzeigenbildschirm (110) in Reaktion auf ein Erkennen der Bildlaufeingabe an einem ersten Bereich (265) auf der berührungsempfindlichen Schnittstelle (115) durchläuft; und einen zweiten Betrag des Texts und/oder Grafiken, welcher geringer ist als der erste Betrag, auf dem Anzeigenbildschirm (110) in Reaktion auf ein Erkennen derselben Bildlaufeingabe an einem zweiten Bereich (270) auf der bildempfindlichen Schnittstelle (115) und unabhängig von einer Geschwindigkeit der Bildlaufeingabe durchläuft, wobei
der Text und/oder Grafiken eine Vielzahl von alphanumerischen Einträgen umfasst, und wobei der computerlesbare Programmcode **gekennzeichnet ist durch**:
computerlesbaren Programmcode, welcher, wenn dieser ausgeführt wird, ein sich ganz links befindliches Zeichen eines ganz oben liegenden Eintrags der Vielzahl von Einträgen, welcher aktuell auf dem Anzeigebildschirm (110) angezeigt wird, in Reaktion auf ein Erkennen der Bildlaufeingabe an dem ersten Bereich (265) hervorhebt;
computerlesbaren Programmcode, welcher, wenn dieser ausgeführt wird, eine Übergangseingabe, welche eine Bewegung des Benutzereingabeobjekts von dem ersten Bereich (265) zu dem zweiten Bereich (270) angibt, in Reaktion auf das Berührungssignal erkennt; und
computerlesbaren Programmcode, welcher, wenn dieser ausgeführt wird, auf dem Anzeigebildschirm (110) ein sich auf dasjenige von der Vielzahl von Einträgen angezeigte anschließende Zeichen in Reaktion auf eine Erkennung der Übergangseingabe hervorhebt; und
computerlesbaren Programmcode, welcher, wenn dieser ausgeführt wird, nur diejenigen der Vielzahl von Einträgen, welche dasselbe sich ganz links befindliche Zeichen als das von der Vielzahl von Einträgen angezeigte aufweisen, in Reaktion auf ein dem Erkennen der Übergangseingabe nachfolgenden Erkennen der Bildlaufeingabe an dem zweiten Bereich (270) durchläuft.

## Revendications

1. Dispositif électronique (100), comprenant :
une interface d'utilisateur (155) comprenant un écran d'affichage (110) pouvant fonctionner pour afficher un texte et/ou des graphiques et une interface tactile (115) comprenant un réseau de capteurs (255) pouvant fonctionner pour recevoir une entrée de défilement à partir d'un objet d'entrée d'utilisateur et pour générer un signal tactile en réponse à celle-ci ; et
un processeur (140) couplé à l'interface d'utilisateur (155) et pouvant fonctionner pour détecter l'entrée de défilement et un emplacement sur l'interface tactile (115) au niveau duquel l'entrée de défilement a été reçue en réponse au signal tactile, pour faire défiler une première quantité du texte et/ou des graphiques sur l'écran d'affichage (110) en réponse à la détection de l'entrée de défilement au niveau d'une première région (265) sur l'interface tactile (115) et indépendamment d'une vitesse de l'entrée de défilement, et pour faire défiler une deuxième quantité du texte et/ou des graphiques qui est inférieure à la première quantité sur l'écran d'affichage (110) en réponse à la détection de la même entrée de défilement au niveau d'une deuxième région (270) sur l'interface tactile (115) et indépendamment de la vitesse de l'entrée de défilement, dans lequel :
le texte et/ou les graphiques comprend/comprennent une pluralité d'entrées alphanumériques, où le dispositif électronique (100) est **caractérisé en ce que**
le processeur (140) peut fonctionner pour mettre en évidence le caractère le plus à gauche de l'entrée la plus haute parmi la pluralité d'entrées qui est actuellement affichée sur l'écran d'affichage (110) en réponse à la détection de l'entrée de défilement au niveau de la première région (265) ;
le processeur (140) peut fonctionner pour détecter une entrée de transition indiquant le déplacement de l'objet d'entrée d'utilisateur de la première région (265) à la deuxième région (270) en réponse au signal tactile, et le processeur (140) peut fonctionner pour mettre en évidence sur l'écran d'affichage (110) un caractère suivant de l'entrée affichée parmi la pluralité d'entrées en réponse à la détection de l'entrée de transition ; et
le processeur (140) peut fonctionner pour faire défiler seulement certaines entrées parmi la pluralité d'entrées ayant le même caractère le plus à gauche comme étant l'entrée affichée parmi la pluralité d'entrées en réponse à la détection de l'entrée de défilement au niveau de la deuxième région (270) suite à la détection de l'entrée de transition.

2. Dispositif électronique (100) de la revendication 1, dans lequel le processeur (140) peut fonctionner pour détecter une distance de déplacement de l'entrée de défilement sur l'interface tactile (115) en réponse au signal tactile, pour mettre en corrélation la distance de déplacement avec la première quantité du texte et/ou des graphiques selon un premier rapport de sensibilité en réponse à la détection de l'entrée de défilement au niveau de la première région (265), et pour mettre en corrélation la distance de déplacement avec la deuxième quantité du texte et/ou des graphiques selon un deuxième rapport de sensibilité en réponse à la détection de la même entrée de défilement au niveau de la deuxième région (270).

3. Dispositif électronique (100) de la revendication 2, dans lequel :
le premier rapport de sensibilité associe une zone pouvant être défilée de la première région (265) à un premier pourcentage du texte et/ou des graphiques, et le deuxième rapport de sensibilité associe une zone pouvant être défilée de la deuxième région (270) à un deuxième pourcentage du texte et/ou des graphiques qui est inférieur au premier pourcentage de sorte que la distance de déplacement de l'entrée de défilement représente une quantité plus importante du texte et/ou des graphiques en réponse à la détection de celle-ci au niveau de la première région (265) qu'au niveau de la deuxième région (270) ; ou
le premier rapport de sensibilité associe une zone pouvant être défilée de la première région (265) à la totalité du texte et/ou des graphiques, le deuxième rapport de sensibilité associe une zone pouvant être défilée de la deuxième région (270) à une fraction du texte et/ou des graphiques, le processeur (140) peut fonctionner pour faire défiler une quantité inférieure ou égale à la totalité du texte et/ou des graphiques en réponse à la détection de l'entrée de défilement au niveau de la première région (265), et le processeur (140) peut fonctionner pour empêcher le défilement d'une fraction plus grande que la fraction du texte et/ou des graphiques en réponse à la détection de la même entrée de défilement au niveau de la deuxième région (270).

4. Dispositif électronique (100) selon l'une quelconque des revendications 1 à 3, dans lequel le processeur (140) peut fonctionner pour faire défiler la première quantité du texte et/ou des graphiques sur l'écran d'affichage (110) à une vitesse de défilement supérieure à celle de la deuxième quantité du texte et/ou des graphiques.

5. Dispositif électronique (100) selon l'une quelconque des revendications 1 à 4, dans lequel :
la deuxième région (270) est immédiatement adjacente à la première région (265) sur l'interface tactile (115) de sorte que l'interface tactile (115) puisse fonctionner pour recevoir l'entrée de défilement au niveau de la première et/ou la deuxième région (265, 270) sans lever l'objet d'entrée d'utilisateur de l'interface tactile (115) ; ou
l'interface tactile comprend en outre une troisième région, et où le processeur (140) peut fonctionner pour faire défiler une troisième quantité du texte et/ou des graphiques qui est inférieure à la deuxième quantité sur l'écran d'affichage (110) en réponse à la détection de la même entrée de défilement au niveau de la troisième région.

6. Dispositif électronique (100) selon l'une quelconque des revendications 1 à 5, dans lequel :
des capteurs parmi le réseau de capteurs (255) sous-jacents à la première région (265) peuvent fonctionner pour générer un signal tactile en réponse à la réception de l'entrée de défilement différent de celui des capteurs parmi le réseau de capteurs (255) sous-jacents à la deuxième région (270) ; ou
des capteurs parmi le réseau de capteurs (255) sous-jacents à la première région (265) sont plus nombreux que des capteurs parmi le réseau de capteurs (255) sous-jacents à la deuxième région (270).

7. Dispositif électronique (100) selon l'une quelconque des revendications 1 à 6, dans lequel le processeur (140) peut fonctionner pour détecter l'entrée de défilement comme étant reçue à la fois au niveau de la première région (265) et de la deuxième région (270) de l'interface tactile (115), et dans lequel le processeur (140) peut fonctionner pour faire défiler une troisième quantité du texte et/ou des graphiques en réponse à celle-ci.

8. Dispositif électronique (100) de la revendication 7, dans lequel le processeur (140) peut fonctionner pour détecter l'entrée de défilement en tant que combinaison d'une première entrée de défilement reçue par l'intermédiaire d'un premier objet d'entrée d'utilisateur et d'une deuxième entrée de défilement reçue par l'intermédiaire d'un deuxième objet d'entrée d'utilisateur.

9. Dispositif électronique (100) de la revendication 7, dans lequel :
la troisième quantité de texte et/ou de graphiques comprend une somme ou un produit de la première quantité et de la deuxième quantité du texte et/ou des graphiques ; ou
le processeur (140) peut fonctionner pour faire défiler la troisième quantité de texte à une troisième vitesse de défilement, où la troisième vitesse de défilement comprend une somme ou un produit d'une première vitesse de défilement associée à la première région (265) et d'une deuxième vitesse de défilement associée à la deuxième région (270).

10. Procédé de fonctionnement d'un dispositif électronique pour commander le défilement d'un texte et/ou de graphiques sur un écran d'affichage (110) de celui-ci, le procédé comprenant les étapes consistant :
à recevoir (500) une entrée de défilement à partir d'un objet d'entrée d'utilisateur au niveau d'une interface tactile (115) du dispositif électronique ;
à générer (510) un signal tactile en réponse à la réception de l'entrée de défilement au niveau de l'interface tactile (115) ;
à détecter (520) l'entrée de défilement et un emplacement sur l'interface tactile (115) au niveau duquel l'entrée de défilement a été reçue en réponse au signal tactile ;
à faire défiler (530) une première quantité du texte et/ou des graphiques sur l'écran d'affichage (110) en réponse à la détection de l'entrée de défilement au niveau d'une première région (265) sur l'interface tactile (115) et indépendamment de la vitesse de l'entrée de défilement ; et
à faire défiler (530) une deuxième quantité du texte et/ou des graphiques qui est inférieure à la première quantité sur l'écran d'affichage (110) en réponse à la détection de la même entrée de défilement au niveau d'une deuxième région (270) sur l'interface tactile (115) et indépendamment de la vitesse de l'entrée de défilement, où
le texte et/ou les graphiques comprend/comprennent une pluralité d'entrées alphanumériques, et où le procédé est **caractérisé par** les étapes consistant :
à mettre en évidence le caractère le plus à gauche de l'entrée la plus haute parmi la pluralité d'entrées qui est actuellement affichée sur l'écran d'affichage (110) en réponse à la détection de l'entrée de défilement au niveau de la première région (265) ;
à détecter une entrée de transition indiquant le déplacement de l'objet d'entrée d'utilisateur de la première région (265) à la deuxième région (270) en réponse au signal tactile, et
à mettre en évidence sur l'écran d'affichage (110) un caractère suivant de l'entrée affichée parmi la pluralité d'entrées en réponse à la détection de l'entrée de transition ; et
à faire défiler seulement certaines entrées parmi la pluralité d'entrées ayant le même caractère le plus à gauche comme étant l'entrée affichée parmi la pluralité d'entrées en réponse à la détection de l'entrée de défilement au niveau de la deuxième région (270) suite à la détection de l'entrée de transition.

11. Procédé de la revendication 10, comprenant en outre les étapes consistant :
à détecter une distance de déplacement de l'entrée de défilement sur l'interface tactile (115) en réponse au signal tactile ;
à mettre en corrélation la distance de déplacement avec la première quantité du texte et/ou des graphiques selon un premier rapport de sensibilité en réponse à la détection de l'entrée de défilement au niveau de la première région (265) ; et
à mettre en corrélation la distance de déplacement avec la deuxième quantité du texte et/ou des graphiques selon un deuxième rapport de sensibilité en réponse à la détection de la même entrée de défilement au niveau de la deuxième région (270).

12. Procédé de la revendication 10 ou 11, comprenant en outre l'étape consistant :
à faire défiler la première quantité du texte et/ou des graphiques sur l'écran d'affichage (110) à une vitesse de défilement supérieure à celle de la deuxième quantité du texte et/ou des graphiques.

13. Procédé selon l'une quelconque des revendications 10 à 12, dans lequel la détection de l'entrée de défilement comprend l'étape consistant :
à détecter l'entrée de défilement comme étant reçue à la fois au niveau de la première région (265) et de la deuxième région (270) de l'interface tactile (115), et comprenant en outre l'étape consistant :
à faire défiler une troisième quantité du texte et/ou des graphiques en réponse à la détection de l'entrée de défilement comme étant reçue à la fois au niveau de la première région (265) et de la deuxième région (270).

14. Procédé de la revendication 13, dans lequel :
la troisième quantité de texte et/ou de graphiques comprend une somme ou un produit de la première quantité et de la deuxième quantité du texte et/ou des graphiques ; ou
la troisième quantité de texte est amenée à défiler à une troisième vitesse de défilement qui comprend une somme ou un produit d'une première vitesse de défilement associée à la première région (265) et d'une deuxième vitesse de défilement associée à la deuxième région (270).

15. Produit de programme informatique permettant de faire fonctionner un dispositif électronique pour commander le défilement de texte et/ou de graphiques sur un écran d'affichage (110) de celui-ci, le produit de programme informatique comprenant :
un support de stockage lisible par ordinateur ayant un code de programme lisible par ordinateur incorporé dans ledit support, ledit code de programme lisible par ordinateur comprenant :
un code de programme lisible par ordinateur qui détecte, lorsqu'il est exécuté, une entrée de défilement provenant d'un objet d'entrée d'utilisateur au niveau d'une interface tactile (115) du dispositif électronique ;
un code de programme lisible par ordinateur qui génère, lorsqu'il est exécuté, un signal tactile en réponse à l'entrée de défilement ;
un code de programme lisible par ordinateur qui interprète, lorsqu'il est exécuté, l'entrée de défilement et détermine un emplacement sur l'interface tactile (115) au niveau duquel l'entrée de défilement a été reçue en réponse au signal tactile ; et
un code de programme lisible par ordinateur qui, lorsqu'il est exécuté, fait défiler une première quantité du texte et/ou des graphiques sur l'écran d'affichage (110) en réponse à la détection de l'entrée de défilement au niveau d'une première région (265) sur l'interface tactile (115) ; et fait défiler une deuxième quantité du texte et/ou des graphiques qui est inférieure à la première quantité sur l'écran d'affichage (110) en réponse à la détection de la même entrée de défilement au niveau d'une deuxième région (270) sur l'interface tactile (115) et indépendamment d'une vitesse de l'entrée de défilement, où
le texte et/ou les graphiques comprend/comprennent une pluralité d'entrées alphanumériques, et où le code de programme lisible par ordinateur est **caractérisé par** :
un code de programme lisible par ordinateur qui met en évidence, lorsqu'il est exécuté, le caractère le plus à gauche de l'entrée la plus haute parmi la pluralité d'entrées qui est actuellement affichée sur l'écran d'affichage (110) en réponse à la détection de l'entrée de défilement au niveau de la première région (265) ;
un code de programme lisible par ordinateur qui détecte, lorsqu'il est exécuté, une entrée de transition indiquant le déplacement de l'objet d'entrée d'utilisateur de la première région (265) à la deuxième région (270) en réponse au signal tactile, et
un code de programme lisible par ordinateur qui met en évidence sur l'écran d'affichage, lorsqu'il est exécuté, (110) un caractère suivant de l'entrée affichée parmi la pluralité d'entrées en réponse à la détection de l'entrée de transition ; et
un code de programme lisible par ordinateur qui fait défiler, lorsqu'il est exécuté, seulement certaines entrées parmi la pluralité d'entrées ayant le même caractère le plus à gauche comme étant l'entrée affichée parmi la pluralité d'entrées en réponse à la détection de l'entrée de défilement au niveau de la deuxième région (270) suite à la détection de l'entrée de transition.
